# EUROPEAN PATENT SPECIFICATION

(11) **EP 0 892 889 B1**
(45) Date of publication and mention of the grant of the patent: **14.11.2001**
(21) Application number: 97914656.0
(22) Date of filing: 02.04.1997
(51) Int. Cl.: F03B 13/14, F03B 13/18

(54) **SUBMERGED HYDROPNEUMATIC WAVE ENERGY CONVERTER**
UNTERWASSER ANGEORDNETER HYDROPNEUMATISCHER WELLENENERGIEUMWANDLER
CONVERTISSEUR HYDROPNEUMATIQUE IMMERGE PERMETTANT D'EXPLOITER L'ENERGIE DES VAGUES

(30) Priority: 02.04.1996 NL 1002765
(43) Date of publication of application: 27.01.1999
(73) Proprietor: A.P. van den Berg Beheer B.V., 8445 PK Heerenveen (NL)
(72) Inventor: VAN DEN BERG, Arie, Pieter, NL-8454 LB Mildam (NL)
(74) Representative: Mommaerts, Johan Hendrik, Dipl.-Phys.
(86) International application number: NL9700164
(87) International publication number: WO9737123

(56) References cited:
- WO-A-95/08060
- GB-A- 2 047 353
- GB-A- 2 169 684
- NL-C- 1 002 765
- US-A- 3 989 951

## Description

The invention relates to a hydro-pneumatic installation, intended for converting wave and heave energy into electrical energy in such a manner that the energy of the vertical movements of the water masses per unit of effective surface area will be maximally utilized.

Document WO-A-9 508 060 discloses a hydro-pneumatic wave and heave power station according to the preamble of claim 1.

In contrast to prior systems, which have been particularly developed for this alternative manner of energy production, the principle of operation is not based on floats moving up and down with the waves, which floats transfer their kinetic energy in some manner (and often by means of complicated transmissions) to an electrical generator, but using the hydrostatical pressure difference of wave tops and valleys having a continually shifting phase, which power station is constructed in the manner formulated in claim 1. Favourable embodiments are mentioned in the subclaims.

The invention will be elucidated below by reference to a drawing, showing in:
Fig. 1 a simplified diagrammatical vertical section of a power station according to the invention; and
Figs. 2 and 3 a diagrammatical top and lateral view respectively of a plural power station according to the invention.

A large piston 2 situated below a wave top 1 is, in the situation shown, moving downwardly, which movement stops as soon as the sum of the own weight and the hydrostatic pressure of the water column 3 above this piston is in equilibrium with the pressure of gas compressed in an underlying pressure chamber 4, which chamber is freely communicating with an accumulating vessel 5. This amply sized vessel 5 serves for influencing the pressure changes, so as to make a maximal use of the amplitude corresponding with a specific wave movement. This vessel connects by means of a valve 6 with a compressor pump 7 and also with a bleeding valve 8.

A piston rod 9 of the large piston 2 is directly and in particular coaxially coupled with a piston rod 10 of a small piston 11, the latter thus completely following the movements of the large piston 2. The rod 10 and the piston 11 form, together with a cylinder 12 with a front plate 13, a hydraulic cylinder of a known type. The liquid which is displaced by the piston 11 reaches a rectifying circuit 14 with a T-connector 15, and subsequently a one-way valve 16 connecting with an inlet tube 17 of a hydraulic displacement motor 18. This hydraulic motor is by way of example shown as a so-called *Roots Blower,* but any other known and in particular rotating hydraulic motor may be used instead.

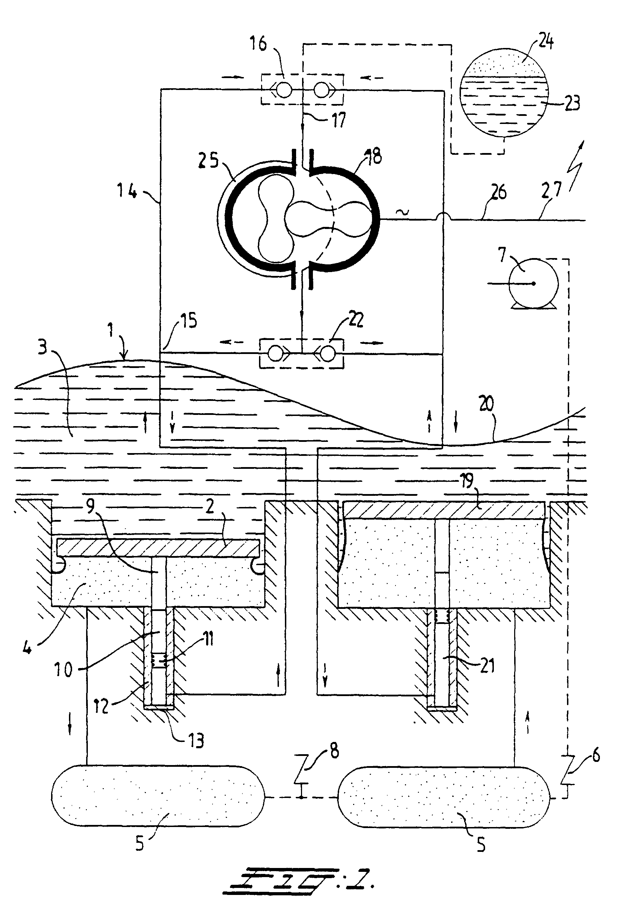

Furthermore a second large piston 19 is shown in Fig. 1, which is directly connected with a hydraulic piston 21, and which, furthermore, communicates in the same manner as the piston 9 and the hydraulic piston 11 with an accumulating vessel 5 and the hydraulic circuit 14.

In the situation shown, the second large piston 19 is situated precisely below a wave valley 20, which piston is returned towards its highest position by the air pressure at its lower side. During its return movement the piston 21 has been moved upwards too, and then the liquid from the hydraulic motor 18 is sucked in by means of a one-way valve 22.

After a phase shift of the heave wave all this is repeated in an inverse sequence. From a storage vessel 23 - in which also a driving gas 24 such as nitrogen is present - leak losses which may occur in the hydraulic circuit 14 will be supplemented.

A generator 25 which is directly coupled with the shaft of the hydraulic motor 18 generates electricity which, by means of a cable 26 (in particular a cable with a small resistance such as a superconductive cable) is transferred to a distribution or utilization point 27.

The whole assembly mentioned above can be housed in a submarine engine room, the large pistons 9 and 19 being arranged in the roof thereof.

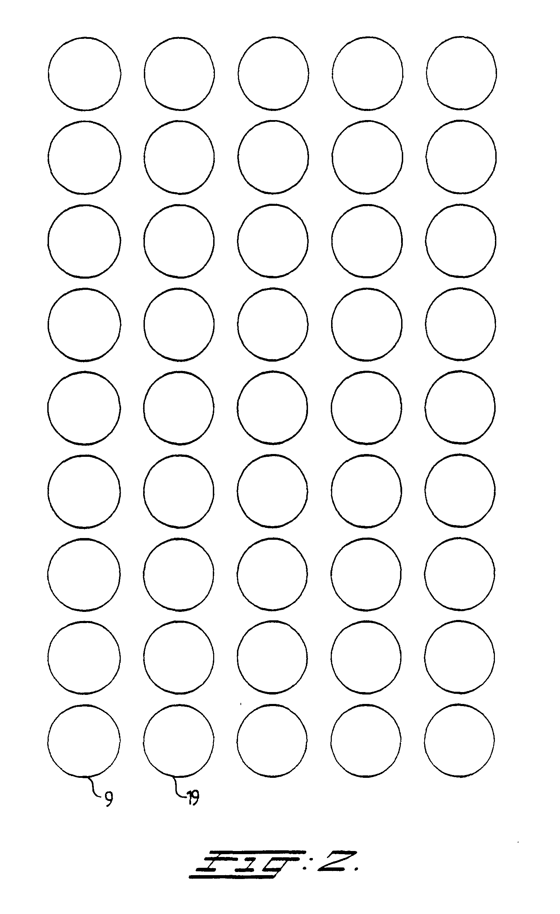

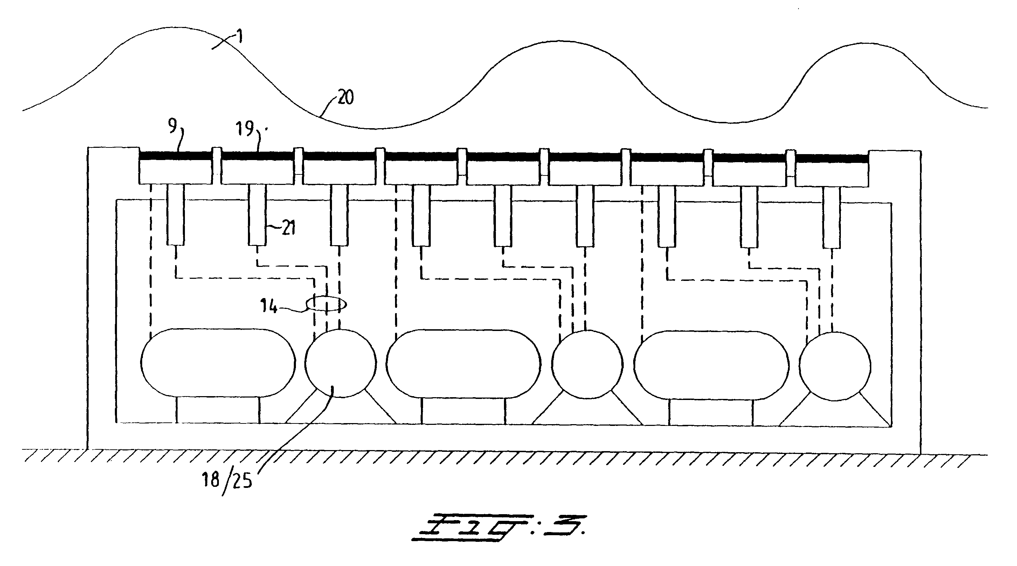

Fig. 2 shows a top view of such an installation, in which a large number (45 in the case shown) of pistons 9 and 19 is present. This number is, of course, not to be considered in the restrictive sense. Fig. 3 shows a diagrammatical lateral view of this installation.

Such an installation can, for example, be housed in a concrete caisson which is constructed on the mainland and is transported floating on the water towards the site of use to be sunk there. It is also possible to provide cavities in the water bottom in which adapted cylinders are arranged.

Such a submarine installation can, moreover, be connected with the mainland by means of a tunnel for obtaining access for repair and maintenance operations and for leading through the electric cables.

It is also possible to accumulate, during periods of relative high wave motions, a portion of the wave and heave energy in the form of a compressed gas, and to transform this energy again into electrical energy during load peaks by means of a motor/generator assembly.

## Claims

1. A hydro-pneumatic wave and heave power station for converting wave and heave energy into usable electrical energy, comprising a plurality of units intended to be fixed on the water bottom, each unit comprising a first piston (2, 19), each first piston (2, 19) co-operating with an underlying pressure chamber (4) keeping said piston substantially in equilibrium with the water pressure acting on its upper surface, said first piston (2, 19) being directly coupled with a second piston (11, 21) with a smaller diameter movable in a hydraulic cylinder (12), the cylinders (12) of a number of units being included in a hydraulic rectifying circuit (14) comprising a hydraulic motor (18) coupled with an electric generator (25), **characterized in that** the pressure chamber (4) of a unit communicates with an accumulating vessel (5).

2. The power station of claim 1, **characterized in that** said accumulating vessel (5) connects by means of a valve (6) with a compressor pump (7), and also with a bleeding valve (8).

3. The power station of claim 1 or 2, **characterized in that** the cylinders are formed by cavities formed in the water bottom.

4. The power station of claim 1 or 2, **characterized in that** the cylinders are formed as cavities in prefabricated caissons to be lowered into the water bottom.

5. The power station of any one of claims 1-4, **characterized in that** the complete power station is housed in a space arranged on or below the water bottom, which is connected with the mainland by means of a tunnel.

6. The power station according anyone of claims 1..5, **characterized in that** means are present for accumulating a portion of the wave and heave energy in the form of a compressed gas, during high wave motions, by means of which, as required, electrical energy can be generated by an assembly of a motor and a generator.

## Patentansprüche

1. Hydropneumatisches Wellen- und Hebe-Kraftwerk zur Umwandlung einer Wellen- und Hebeenergie in nutzbare elektrische Energie, bestehend aus einer Vielzahl von Einheiten, die zur Befestigung an dem Wasserboden beabsichtigt sind, wobei jede Einheit einen ersten Kolben (2, 19) aufweist, jeder erste Kolben (2, 19) mit einer unterliegenden Druckkammer (4) zusammenwirkt, welche den Kolben im wesentlichen im Gleichgewicht hält mit dem auf seine obere Fläche einwirkenden Wasserdruck, wobei der erste Kolben (2, 19) direkt gekuppelt ist mit einem zweiten Kolben (11, 21) mit einem kleineren Durchmesser, der in einem Hydraulikzylinder (12) beweglich ist, wobei die Zylinder (12) einer Anzahl von Einheiten in einer hydraulischen Gleichrichterschaltung (14) eingeschlossen sind, die einen Hydraulikmotor (18) aufweist, der mit einem elektrischen Generator (25) gekuppelt ist, **dadurch gekennzeichnet, daß** die Druckkammer (4) einer Einheit eine Verbindung mit einem Speicherbehälter (5) hat.

2. Kraftwerk nach Anspruch 1, **dadurch gekennzeichnet, daß** der Sammelbehälter (5) mittels eines Ventils (6) mit einer Kompressorpumpe (7) und weiterhin mit einem Entlastungsventil (8) verbunden ist.

3. Kraftwerk nach Anspruch 1 oder 2, **dadurch gekennzeichnet, daß** die Zylinder durch im Wasserboden gebildeten Hohlräumen ausgebildet sind.

4. Kraftwerk nach Anspruch 1 oder 2, **dadurch gekennzeichnet, daß** die Zylinder als Hohlräume in vorgefertigten und auf den Wasserboden abzusenkende Caissons ausgebildet sind.

5. Kraftwerk nach einem der Ansprüche 1..4, **dadurch gekennzeichnet, daß** das gesamte Kraftwerk in einem Raum auf oder unter dem Wasserboden angeordnet ist, welcher Raum mittels eines Tunnels mit dem Festland verbunden ist.

6. Kraftwerk nach einem der Ansprüche 1..5, **dadurch gekennzeichnet, daß** Mittel zum Speichern eines Teiles der Wellen- oder Hebeenergie in Form eines Pressgases während hoher Wellenbewegungen vorgesehen sind, mittels welcher nach Bedarf elektrische Energie mittels einer Kombination eines Motors und eines Generators erzeugt werden kann.

## Revendications

1. Station hydropneumatique génératrice d'énergie par vagues et houle pour convertir une énergie des vagues et de la houle en une énergie électrique utilisable, comportant une pluralité d'unités destinées à être fixées au fond de l'eau, chaque unité comportant un premier piston (2, 19), chaque premier piston (2, 19) coopérant avec une chambre sous pression sous-jacente (4) maintenant ledit piston pratiquement en équilibre avec la pression de l'eau agissant sur sa surface supérieure, ledit premier piston (2, 19) étant couplé directement à un second piston (11, 21) ayant un diamètre plus petit mobile dans un cylindre hydraulique (12), les cylindres (12) d'un certain nombre d'unités étant inclus dans un circuit de rectification hydraulique (14) comportant un moteur hydraulique (18) couplé à un générateur électrique (25), **caractérisée en ce que** la chambre sous pression (4) d'une unité communique avec un récipient d'accumulation (5).

2. Station génératrice d'énergie selon la revendication 1, **caractérisée en ce que** ledit récipient d'accumulation (5) est connecte à une pompe de compresseur (7) par l'intermédiaire d'une vanne (6) et aussi à une vanne de purge (8).

3. Station génératrice d'énergie selon la revendication 1 ou 2, **caractérisée en ce que** les cylindres sont formés par des cavités formées au fond de l'eau.

4. Station génératrice d'énergie selon la revendication 1 ou 2, **caractérisée en ce que** les cylindres sont formés sous forme de cavités dans des caissons préfabriqués pour être descendus au fond de l'eau.

5. Station génératrice d'énergie selon l'une quelconque des revendications 1 à 4, **caractérisée en ce que** la station génératrice d'énergie complète est enfermée dans un espace agencé sur le fond de l'eau, ou au-dessous de celui-ci, qui est relié à la terre ferme par l'intermédiaire d'un tunnel.

6. Station génératrice d'énergie selon l'une quelconque des revendications 1 à 5, **caractérisée en ce que** des moyens sont présents pour accumuler une partie de l'énergie des vagues et de la houle sous la forme d'un gaz comprimé, pendant de grands mouvements de vagues, par l'intermédiaire desquels, lorsque cela est nécessaire, de l'énergie électrique peut être générée par un ensemble d'un moteur et d'un générateur.
